# NEUE EUROPÄISCHE PATENTSCHRIFT

(11) **EP 0 331 675 B2**
(45) Veröffentlichungstag und Bekanntmachung des Hinweises auf die Entscheidung über den Einspruch: **18.06.2008**
(45) Hinweis auf die Patenterteilung: 18.12.1991
(21) Anmeldenummer: 87907305.4
(22) Anmeldetag: 11.11.1987
(51) Int. Cl.: G09B 29/10

(54) **SYSTEM ZUR AUSGABE VON WEGEINFORMATIONEN FÜR FAHRER VON LANDFAHRZEUGEN UND INFORMATIONSAUSGABESYSTEM**
SYSTEM FOR SUPPLYING DRIVERS OF LAND ROAD VEHICLES WITH ROUTE INFORMATION
SYSTEME POUR DELIVRER DES INFORMATIONS DE SIGNALISATION ROUTIERE A UN CONDUCTEUR DE VEHICULE

(30) Priorität: 10.01.1987 DE 3700552
(43) Veröffentlichungstag der Anmeldung: 13.09.1989
(73) Patentinhaber: ROBERT BOSCH GMBH, 70442 Stuttgart (DE)
(72) Erfinder: ZECHNALL, Wolf, D-3200 Hildesheim (DE)
(86) Internationale Anmeldenummer: PCT/DE1987/000510
(87) Internationale Veröffentlichungsnummer: WO 1988/005199

(56) Entgegenhaltungen:
- EP-A2- 0 133 249
- EP-A2- 0 154 018
- EP-B- 0 085 422
- Chip, Nr. 11, November 1985, Vogel Verlag (Würzburg, DE) "Elektronische Beifahrer", Seiten 42-47, siehe das ganze Dokument
- Funkschau, Nr. 4, Februar 1985, Franzis Verlag KG (München, DE) Dr Pilsak "Informieren und Leiten", Seiten 33-36, siehe das ganze Dokument
- Patent Abstracts of Japan, Band 6, Nr. 86 (P-443)(2143) 4. April 1986, & JP, A, 60224022

## Beschreibung

Die Erfindung betrifft eine Ortungsvorrichtung für Landfahrzeuge nach der Gattung des Hauptanspruchs.

Fahrer von Landfahrzeugen, insbesondere PKW oder LKW, erhalten Weginformationen durch Verkehrszeichen, die am Straßenrand aufgestellt, an brückenartigen Trägem über den Straßen oder als Fahrbahnmarkierungen angeordnet sind.

Für ortsunkundige Fahrer ist dabei die Informationsflut, die sie für ihre Orientierung auswerten müssen, so groß, daß sie leicht wichtige Informationen, insbesondere Gefahrenzeichen, übersehen oder so langsam fahren, daß sie den fließenden Verkehr behindern oder gefährden. Aber selbst bei besonderer Aufmerksamkeit; kann es vorkommen, daß Fahrer Verkehrszeichen nicht wahmehmen können, weil diese verschmutzt sind, durch haltende oder nebenher fahrende Fahrzeuge verdeckt sind oder durch einen Verkehrsunfall zerstört wurden.

Als Beispiel sind hier Hinweise auf Kindergärten, Schulen, Alten- und Blindenheime, Gefällstrecken, Baustellen, Unterführungen, Kurven und ähnliches zu nennen. Das Nichtwahrnehmen solcher Informationen bleibt zwar in den meisten Fällen ohne schädliche Folgen, durch eine unglückliche Verkettung mehrerer Umstände kann die fehlende Information aber einen entscheidenden Beitrag zu einem Unfallereignis liefern.

Aus der Zeitschrift CHIP, Nr. 11, November 1985, Seite 42 bis 47 ist bereits ein Informations- und Leitsystem bekannt geworden, bei dem Induktionsschleifen in der Fahrbahnfläche eingebracht sind und Sender entlang der Fernstraßen installiert sind. Über diese Sender erhält der Fahrer Fahrtrichtungsempfehlungen für alle Ziele im Fernverkehr plus Zusatzinformationen über Geschwindigkeitsbegrenzungen sowie Witterungsbedingungen und den Straßenzustand. Das dort beschriebene System ist jedoch-lediglich in der Lage, in der Nähe des Senders befindliche Zuatzinformationen zu übertragen, die dann im Fahrzeug selbst angezeigt werden. Hierbei ist zu berücksichtigen, daß insbesondere im Stadtbereich oder auf weniger befahrenen Strecken die Anbringung von Sendern zur Übertragung von Zusatzinfonnationen recht kostspielig ist, so daß die Anwendung des dort vorgeschlagenen Leit- und Informationssystems im flächendeckenden Rahmen recht aufwendig sein dürfte. Weiterhin sind dieser Entgegenhaltung auch Ortungs- und Navigationssysteme zu-enbiehmen, die einen autarken Betrieb ermöglichen. Diese Systeme sind jedoch lediglich in der Lage, Navigationshilfen zu geben.

Aus der Zeitschrift Funkschau, 4/1985 Seite 33 bis 36 sind ebenfalls autarke Navigatonssysteme bekannt, die elektronische Straßenkarten aufweisen, auch diese Geräte können jedoch lediglich akustische oder optische Fahrtrichtungsempfehlungen abgeben.

Die EP-A-0 085 422 offenbart ein Verkehrsleit- und Informationssystem, bei welchem mittels am Straßenrand fest angeordneten Leitbaken Informationen für an diesem Ort geltende Verkehrsvorschriften an fahrzeugseitige Empfänger, die diese Leitbaken passieren, übertragen werden. Auf Grundlage einer Verknüpfung derjenigen Vorschriften, deren Ortskennzeichnung mit der gerade ermittelten Fahrzeugposition übereinstimmt, mit Messwerten, die das Fahrverhalten wiedergeben, kann im Falle eines nicht verkehrsgerechten Verhaltens des Fahrzeugs bzw. Fahrzeugführers ein Warnsignal zur Ausgabe an den Fahrzeugführer erzeugt werden. Die erfindungsgemäße Ortungsvorrichtung sieht vor, dass auch bei rechnergestützen Ortungssystemen Zusatzinformationen auswertbar sind. Diese Zusatzinformationen sind wie die Daten für die elektronische Straßenkarte in einem Speicher abgelegt und werden in Abhängigkeit vom Standort des Fahrzeuges mit den Straßeninformationen korreliert, so dass sie zum geeigneten Zeitpunkt zur Verfügung stehen. Erfindungsgemäß ist dabei vorgesehen, dass der Speicher als zusätzliche sicherheitsrelevante Informationen scharfe Kurven in einem Wegabschnitt und eine empfohlene Richtgeschwindigkeit der gespeicherten Straßen enthält, dass eine Korrelationsschaltung zur Korrelation der geographischen Daten mit den sicherheitsrelevanten Informationen vorgesehen ist, dass Sensoren und/oder Eingabemittel für die Geschwindigkeit vorhanden sind, dass die Ausgabeschaltung ein Signal abgibt, wenn aufgrund der sicherheitsrelevanten Informationen eine Zusatzinformation erforderlich wird, da die aktuelle Geschwindigkeit des Landfahrzeugs oberhalb der empfohlenen Richtgeschwindigkeit liegt und dass der Zeitpunkt der Ausgabe des Signals in Abhängigkeit von der Fahrgeschwindigkeit gewählt wird.

Die erfindungsgemäße Ortungsvorrichtung hat demgegenüber den Vorteil, daß auch bei rechnergestützen Ortungssystemen Zusatzinformationen auswertbar sind. Diese Zusatzinformationen sind wie die Daten für die elektronische Straßenkarte in einem Speicher abgelegt und werden in Abhängigkeit vom Standort des Fahrzeuges mit den Straßeninformationen korreliert, so daß sie zum geeigneten Zeitpunkt zur Verfügung stehen. Zusätzliche Sender am Straßenrand sind daher nicht erforderlich. Weiterhin wird durch die erfindungsgemäße Maßnahme erreicht, daß nicht jede sicherheitsnelevarite Information ausgewertet wird, sondern nur solche, die aufgrund der Fahrdaten des Fahrzeuges, wie beispielsweise Geschwindigkeit, Getriebewahlbereich, Gewicht, Fahrzeughöhe, Fahrzeuglänge, Anhängebetrieb, Temperatur oder Nebel, für den Fahrer des Fahrzeuges und das Fahrzeug zu kritischen Situationen fuhren können. Durch diese Beschränkung auf wesentliche Informationen wird die Fähigkeit zu größerer Aufmerksamkeit erhöht. In die gespeicherten sicherheitsrelevanten Informationen lassen sich auch solche einbeziehen, die für Ortsunkundige zwar wesentlich sind, von den zuständigen Verkehrsbehörden aber nicht als hinweiswürdig durch Verkehrszeichen angesehen werden.

Vorteilhafte Weiterbildungen der Erfidung ergeben sich aus den Unteransprüchen. Besonders vorteilhaft ist es, das Auswertesignal einer Ausgabeeinheitzuzuführen, die ein optisches Display oder einen Sprachgeber ansteuert Durch diese Maßnahme ist es möglich, dem Fahrer die Gefahr optisch und/oder akustisch anzuzeigen, indem beispielsweise durch künstlich erzeugte Texte der Fahrer auf die Gefahr aufmerksam gemacht wird oder aber auf einem Bildschirm ein entsprechendes Gefahrensymbol dargestellt wird. Dadurch kann der Fahrer veranlaßt werden, sein Fahrverhalten der zu erwartenden Gefahr anzupassen. Hierbei ist es vorteihaft, sowohl Fahr- als auch Umweltdaten auszuwerten. Ist beispielsweise die Geschwindigkeit des Fahzeuges zu hoch, kann der Fahrer aufgefordert werden, bei gefahrenträchtigen Situationen die Geschwindigkeit seines Fahrzeuges herabzusetzen. Ist mit schwerem Gefälle zu rechnen, kann der Fahrer aufgefordert werden, in einen niedereren Gang zu schalten, oder, wenn die Temperatur sehr niedrig ist, kann der Fahrer vor Kurven vor Glatteis gewarnt werden. Zweckmäßigerweise wird hier nach einer Weiterbildung der Erfindung das Signal fahrgschwindigkeitsabhängig so rechtzeitig ausgegeben, daß sich der Fahrer rechtzeitig auf die Situation einstellen kann. Um Fehlinformationen zu verhindern ist es zweckmäßig, die Information richtungsspezifisch auszugeben, so daß beispielsweise der Fahrer bereits erkennen kann, daß kritische Situationen nurdann auftreten können, wenn er beispielsweise nach rechts abbiegt nicht jedoch, wenn geradeaus weiterfährt.

Vorteilhaft ist es auch, wenn das Signal gleich zur Ansteuerung von entsprechenden Stellgrößen zur Steuerung von Fahrzeugaggregaten dient. Beispielsweise kann bei zu hoher Geschwindigkeit die Drosselklappenstellung verändert werden oder bei einem automatischen Getriebe ein Gangwechsel automatisch eingeleitet werden, wenn für den Fahrer und das Fahrzeug Gefahren drohen. Schließlich ist es noch vorteilhaft, vorwählbare Arten von Information zu unterdrücken oder anzufordern, insbesondere Informationen zu unterdrücken, wenn der Fahrer durch öfteres Befahren dieser Strecken über die meisten Gefahrensituationen bereits informiert ist oder aber anzufordern, wenn der Fahrer bereits im voraus wissen will, mit welchen Gefahren er bei einer gewissen Strecke rechnen muß.

Vorteilhafte Weiterbildungen der Ortungsvorrichtung ergeben sich aus der weiteren Beschreibung und der Zeichnung, die ein Ausführungsbeispiel der Erfindung veranschaulicht.

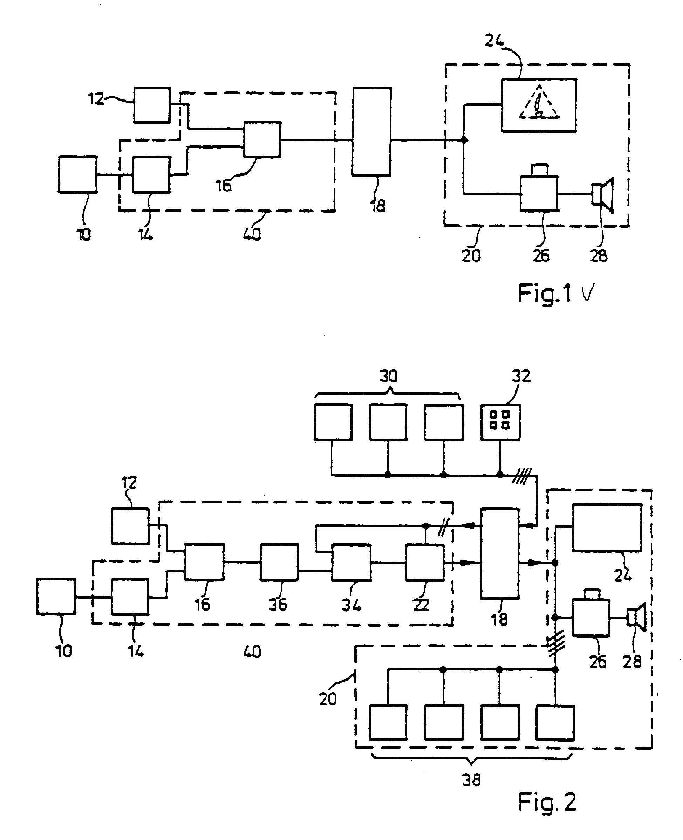

In der Zeichnung zeigen Fig. 1 ein Informationsausgabesystem, welches sicherheitsrelevante Informationen durch Korrelation mit Daten einer elektronischen Straßenkarte gewinnt und optisch und akustisch ausgibt,

Fig. 2 ein Informationsausgabesystem wie Fig. 1, jedoch zusätzlich mit Sensoren, einem Eingabe-Terminal und Stellgliedern.

Das in Fig. 1 dargestellte Informationsausgabesystem beschränkt sich im wesentlichen auf den Grundgedanken der erfindung. Es umfaßt einen zusätzlichen Speicher 12, in dem sicherheitsrelevante Informationen bestimmter Wegeabschnitte gespeichert sind. Als weitere Bestandteile sind ein an sich bekanntes Ortungs- und Navigationssystem für Landfahrzeuge 14 mit einem entsprechenden Speicher 10 für geographische Daten einer elektronischen Straßenkarte vorgesehen. Zur Auswertung beider gespeicherter Daten dient eine Korrelationsschaltung 16, der sich eine Ein-Ausgabe-Schaltung 18 anschließt. Der Ein-Ausgabe-Schaltung 18 ist eine Ausgabeeinheit 20 nachgeschaltet, die ein LCD-Display 24 für graphische Symbole und Schriftzeichen sowie ein an sich bekanntes Autoradio 26 in Verbindung mit einem Sprachsynthesizer und einem Lautsprecher 28 umfaßt. Als Ortungs- und Navigationssystem kann z.B. das in Bosch-Technische-Berichte, Band 8 (1986/-) Heft 1/2, Seiten 7 -14; Neukirchner, Zechnall, "EVA-Ein Autarkes Ortungs- und Navigationssystem für Landfahrzeuge" beschriebene System dienen. Bei diesem System sind die Straßennetzdaten, die vorher durch Versuchsfahrzeuge empirisch ermittelt wurden, in Form einer elektronischen, digitalisierten Straßenkarte gespeichert. Der Fahrergibt dann über ein Eingabeterminal seine Start-und Zielposition ein. Während der Fahrt werden Ortungsdaten über Radsensoren gewonnen,aus denen über die Länge und die Richtung die aktuelle Fahrzeugposition ermittelt wird. Durch Vergleich dieser Daten mit den gespeicherten Daten werden dem Fahrer dann Hinweise über die Fahrtrichtung gegeben.

In dem zusätzlichen Speicher 12 befinden sich sicherheitsrelevante Informationen. Es kann sich dabei um die gleichen Informationen handeln, die auch durch körperliche Gefahrenzeichen am Straßenrand dem Fahrer vermittelt werden sollen. Weiterhin lassen sich aber auch solche Informationen speichern, die nicht auf Verkehrszeichen enthalten sind, aber zu Erhöhung der Verkehrssicherheit ortsunkundiger Fahrer zweckmäßig sind. Außerdem können die Hinweise auch mit Empfehlungen gekoppelt sein, z.B. eine bestimmte Geschwindigkeit nicht zu überschreiten, einen bestimmten Getriebewahlbereich einzuschalten, Licht ein- oder auszuschalten, den Blinker zu betätigen oder auf besonders gefährliche Straßen- oder Verkehrskonstellationen zu achten.

Beim Abfahren der Strecke werden diese zusätzlich gespeicherten sicherheitsrelevanten Informationen mit den aktuellen Ortungsdaten des Ortungs- und Navigationssystems 14 korrelliert. Gelangt der Fahrer an einen Wegeabschnitt, zu dem eine entsprechende sicherheitsrelevante Information gespeichert ist, so wird diese Information von der Korrelationsschaltung 16 über die Ein-Ausgabeschaltung 18 an die Ausgabeeinheit 20 weitergegeben. Hier kann z.B. das Verkehrszeichen als Symbol auf dem LCD-Display 24 abgebildet werden oder über das mit dem Sprachsynthesizer versehene Autoradio 26 im Klartext angesagt werden und eine Empfehlung gegeben werden. Diese könnte im Fall einer Kurve z.B. lauten: "Achtung Rechtskurve, maximale Geschwindigkeit 80 km pro Stunde."

Ähnliche Informationen lassen sich auch für Wegeabschnitte mit Schulen, Kindergärten, Altenheimen oder Blindenheimen geben, weil zu erwarten ist, daß dort Menschen in erhöhtem Maße gefährdet sind, die Verkehrssituationen nicht immer richtig einschätzen können. Auch auf Gefällestrecken, Unterführungen, Steigungen oder unfallträchtige Einmündungen kann verwiesen werden.

Häufig ist die diesem Wegeabschnitt zugeordnete Information nur für eine Fahrtrichtung relevant. Zweckmäßig werden dann auch die entsprechenden Informationen richtungsspezifisch nur für die relevante Fahrtrichtung ausgegeben.

Im Gegensatz zu stationären Verkehrszeichen kann es zweckmäßig sein, den Fahrer in Abhängigkeit seiner Fahrgeschwindigkeit bereits schon vorher mit einer sicherheitsrelevanten Information zu versorgen. Durchfährt der Fahrer während einer verkehrsarmen Zeit einen Streckenabschnitt, wo auch eine höhere Geschwindigkeit zulässig ist, so muß der Hinweis möglichst frühzeitig erfolgen, damit der Fahrer entsprechend Zeit zum Reagieren hat. Befindet sich der Fahrer dagegen in einem Stau, so ist eine frühzeitige Information nicht sinnvoll, da er sie wegen zwischenzeitlich eingetretener Ereignisse wieder vergessen haben kann, bis sie für ihm akut wird.

Um eine unnötige Informationsflut zu vermeiden und gezielter und präziser informieren zu können, läßt sich das Infomationsausgabesystem nach dem vorbeschriebenen Ausführungsbeispiel entsprechend ergänzen. Diesbezüglich wird auf Fig. 2 Bezug genommen.

Hierbei gelangt das Ausgangssignal der Korrelationsschaltung 16 über eine Wandlerschaltung 36, einen Vergleicher 34 und eine Auswerteschaltung 22 zur Ein-Ausgabe-Schaltung 18. Der Vergleicher 34 sowie die Auswerteschaltung 22 sind über Steuer-oder Signalleitungen mit Sensoren 30 und einem Eingabe- Terminal 32 verbunden. Die Ausgabeeinheit 20 umfaßt zusätzlich Stellglieder 38, die auf Fahrzeugaggregate einwirken.

Mittels der Auswerteschaltung 22 lassen sich vorwählbare Informationen anfordern oder unterdrücken. So können z.B. auch Standorte von Tankstellen, Kiosken, Polizei, Apotheken, Post, Banken gespeichert werden. Möchte der Fahrer auf dem Weg zwischen seiner Ausgangsposition und seiner Zielposition auf eine entsprechende Einrichtung aufmerksam gemacht werden, so kann er diese über das Eingabedisplay 32 auswählen. Bei Erreichen des entsprechenden Streckenabschnitts wird er dann so rechtzeitig auf die ausgewählte Einrichtung aufmerksam gemacht, daß er eine entsprechende befahrt oder einen Parkplatz suchen kann und den nachfolgenden Verkehr auf seine Halte- oder Abbiegeabsicht aufmerksam machen kann. Umgekehrt läßt sich z.B. Glatteis oder Schleuderwarnungen unterdrücken, wenn von der Witterung her derartige Gefahren ausgeschlossen werden können und die entsprechenden Wamhinweise als störend empfunden würden.

Zusätzlich zur manuellen Eingabe mittels des Eingäbe-Terminals 32 können auch Fahr- und Umweltdaten automatisch erfaßt werden. Dies geschieht über die Sensoren 30. Bei den Sensoren kann es sich um Weg- und Geschwindigkeitsaufnehmner, Aufnehmer des Getriebewahlbereichs, des Fahrzeugsgewichts oder auch der Außentemperatur handeln. Angaben über die Fahrzeughöhe, die Fahrzeuglänge oderdenAnhängerbetrieb lassen sich dagegen zweckmäßig über das Eingabeterminal 32 eingeben.

Die über das Eingabeterminal 32 oder die Sensoren 30 gewonnenen Daten werden dem Vergleicher 34 zugeführt, der gleichzeitig empfohlene Fahrdaten über die Wandlerschaltung 36 erhält, welche diese aus den Ausgangsdaten der Korrelationsschaltung 16 gewinnt. Erreicht der Fahrer z.B. einen Wegeabschnitt mit einer scharfen Kurve, von der einmal die Tatsache an sich und zum anderen eine empfohlene Richtgeschwindigkeit gespeichert ist, so wird im Vergleicher 34 ermittelt, ob die aktuelle Geschwindigkeit oberhalb oder unterhalb der empfohlenen Richtgeschwindigkeit liegt. Liegt sie weit unterhalb der Richtgeschwindigkeit, so wird zweckmäßig eine Meldung unterbleiben, liegt sie dagegen über die Richtgeschwindigkeit, so wird der Fahrer auf die Kurve und die empfohlene Richtgeschwindigkeit hingewiesen.

Eine ähnliche Entscheidung über die Frage ob eine Warninformation ausgegeben wird oder nicht kann auch bei Gefällestrecken erfolgen. Dabei können Atribute wie Anhängerbetrieb oder hohes Gewicht berücksichtigt werden, die eventuell zu einer geringeren Bremsverzögerung führen würden.

Durch Temperaturfühler könnte auch die Außentemperatur ermittelt und ein Kriterium gefunden werden, ob ein Hinweis auf Glatteisgefahr ausgegeben wird oder nicht. Für Fahrzeuge mit besonders hohem Gewicht oder besonders hohem Aufbau gelten auch Einschränkungen beim Befahren von Brücken oder Unterführungen. Durch den Zusatz des Informationsausgabesystems kann bedarfsweise der Fahrer auf eine zu geringe Traglast einer Brücke oder eine zu geringe Durchfahrtshöhe einer Unterführung besonders aufmerksam gemacht werden.

Zusätzlich können die sicherheitsrelevanten Informationen auch zur Ansteuerung von Stellgliedern 38 verwendet werden, die Fahrzeugaggregate betätigen. Diese Beeinflussung ist allerdings mit entsprechender Vorsicht vorzunehmen, damit nicht Gefahrensituationen erzeugt werden, die durch die Beeinflussung an sich vermieden werden sollen.

Eine durch ein Stellglied herbeigeführte Beeinflussung könnte z.B. das Einschalten von Licht bei der Einfahrt in Tunnel oder Unterführungen sein, das Herunterschalten eines automatischen Getriebes in einen niedrigeren Wahlbereich bei Gefällestrecken oder auch die Reduzierung der von einem Tempostat angehaltenen Geschwindigkeit. In kritischen Situationen könnte auch eine Betätigung der Bremse erfolgen, wenn die Umstände erkennen lassen, daß der Fahrer in eine sonst nicht mehr beherrschbare Gefahrensituation gerät.

Derartige Informationen können einmal ausschließlich den Stellgliedern 38 zur Ausführung von Stellbefehlen übermittelt werden, zweckmäßig ist jedoch eine zusätzliche Übermittlung zu einer optischen oder akustischen Ausgabe.

Es ist nicht erforderlich, die in Fig. 1 und 2 diskret dargestellten Funktionsblöcke als diskrete Schaltungen aufzubauen. Vielmehr können diese Funktionsblöcke auch durch einen Programmgesteuerten Rechner 40 realisiert sein. Dieses bietet die Möglichkeit, andere Aufgaben von dem Rechner ausführen zu lassen und damit der schaltungstechnischen Realisierung eine solche Dimension zu geben, daß sie problemlos in PKW oder LKW untergebracht werden kann. Als Speicher 12 läßt sich wie beim Ortungs- und Navigationssystem "EVA" eine Compaktdisk verwenden, die die Speicher 10 und 12 in Form eines gemeinsamen Massenspeichers enhält.

## Patentansprüche

1. Ortungsvorrichtung für Landfahrzeuge mit einem autarken rechnergestützten Ortungssystem, einem Speicher mit Daten für eine elektronische Straßenkarte, wobei Straßennetzdaten in Form einer elektronischen, digitalisierten Straßenkarte gespeichert sind und mit einer Ausgabeschaltung für Weginformationen, **dadurch gekennzeichnet, daß** der Speicher (10) als zusätzliche sicherheitsrelevante Informationen scharfe Kurven in einem Wegabschnitt und eine empfohlene Richtgeschwindigkeit der gespeicherten Straßen enthält, daß eine Korrelationsschaltung (16) zur Korrelation der geographischen Daten mit den sicherheitsrelevanten Informationen vorgesehen ist, daß Sensoren (30) und/oder Eingabemittel (32) für die Geschwindigkeit vorhanden sind, daß die Ausgabeschaltung (18) ein Signal abgibt, wenn aufgrund der sicherheitsrelevanten Informationen eine Zusatzinformation erforderlich wird, da die aktuelle Geschwindigkeit des Landfahrzeugs oberhalb der empfohlenen Richtgeschwindigkeit liegt, und daß der Zeitpunkt der Ausgabe des Signals in Abhängigkeit von der Fahrgeschwindigkeit gewählt wird.

2. Ortungsvorrichtung nach.Anspruch 1, **dadurch gekennzeichnet daß** eine Ausgabeeinheit (20) vorgesehen ist, die auf das Signal anspricht und eine optische Anzeige, vorzugsweise LCD-Displays (24) und/oder einen akustischen Sprachgeber, vorzugsweise ein mit einem Sprachsynthezizer versehenes Autoradio (26) und einen Lautsprecher (28) umfaßt.

3. Ortungsvorrichtung nach einem der vorhergehenden Ansprüche, **dadurch gekennzeichnet, daß** das Signal richtungsspezifisch ausgegeben wird.

## Claims

1. Locating device for land vehicles having an autonomous computer-supported locating system, a memory with data for an electronic road map, wherein road network data is stored in the form of an electronic digitized road map, and having an output circuit for route information, **characterized in that** the memory (10) contains, as additional, safety-related information sharp bends in a section of a route and a recommended guide speed for the stored roads, **in that** a correlation circuit (16) is provided for correlating the geographic data with the safety-related information, **in that** there are sensors (30) and/or input means (32) for the speed, **in that** the output circuit (18) outputs a signal if, owing to the safety-related information, additional information is necessary since the current speed of the land vehicle is above the recommended guide speed, and **in that** the time of outputting of the signal is selected as a function of the speed.

2. Locating device according to Claim 1, **characterized in that** an output unit (20) is provided which responds to the signal and comprises a visual display, preferably an LCD display (24) and/or an audible speech generator, preferably a car radio (26) provided with a voice synthesizer, and a loudspeaker (28).

3. Locating device according to one of the preceding claims, **characterized in that** the signal is output in a direction-specific fashion.

## Revendications

1. Dispositif de localisation pour véhicules terrestre, avec un système embarqué de localisation assisté par calculateur, en forme de carte routière électronique numérisée contenant des données de réseaux de routes, une mémoire avec des données pour une carte routière électronique, et avec un circuit de délivrance d'informations routières,
**caractérisé en ce que**
la mémoire (10) contient comme informations supplémentaires relatives à la sécurité pour les routes mises en mémoire, des virages difficiles sur un segment de parcours et une vitesse légale recommandée, un circuit de corrélation (16) est conçu pour corréler les données géographiques avec les informations relatives à la sécurité, des capteurs (30) et/ou des moyens d'entrée (32) sont prévus pour la vitesse, le circuit de sortie (18) délivre un signal quand une information complémentaire est indispensable du point de vue des informations relatives à la sécurité, ou si la vitesse actuelle du véhicule terrestre est au-dessus de la vitesse légale recommandée, et le moment de délivrance du signal est choisi en fonction de la vitesse de circulation.

2. Dispositif selon la revendication 1,
**caractérisé en ce qu'**
il est prévu une unité de sortie (20) qui réagit au signal et comprend un indicateur optique, de préférence un écran à cristaux liquides (24) et/ ou un appareil acoustique parlant, de préférence un auto-radio (26) prévu avec un synthétiseur de parole et un haut-parleur (28).

3. Dispositif selon l'une des revendications précédentes,
**caractérisé en ce que**
le signal est délivré de façon spécifique au sens de circulation.
